(19) Europäisches Patentamt
European Patent Office
Office européen des brevets

(11) **EP 1 512 121 B1**

(12) **EUROPEAN PATENT SPECIFICATION**

(45) Date of publication and mention
of the grant of the patent:
**26.09.2007 Bulletin 2007/39**

(21) Application number: **03720796.6**

(22) Date of filing: **29.04.2003**

(51) Int Cl.:
*G06T 5/00* (2006.01)

(86) International application number:
**PCT/IB2003/001870**

(87) International publication number:
**WO 2003/100723 (04.12.2003 Gazette 2003/49)**

(54) **UNIT FOR AND METHOD OF CALCULATING A SHARPENED EDGE**

BERECHNUNGSEINHEIT UND METHODE ZUR KANTENSCHÄRFUNG

UNITE ET PROCEDE DE CALCUL D'UNE BORDURE VIVE

(84) Designated Contracting States:
**AT BE BG CH CY CZ DE DK EE ES FI FR GB GR
HU IE IT LI LU MC NL PT RO SE SI SK TR**

(30) Priority: **24.05.2002 EP 02077016**

(43) Date of publication of application:
**09.03.2005 Bulletin 2005/10**

(73) Proprietor: **Koninklijke Philips Electronics N.V.
5621 BA Eindhoven (NL)**

(72) Inventors:
• **KLOMPENHOUWER, Michiel, A.**
**NL-5656 AA Eindhoven (NL)**
• **DE HAAN, Gerard**
**NL-5656 AA Eindhoven (NL)**
• **VELTHOVEN, Leo, J.**
**NL-5656 AA Eindhoven (NL)**

(74) Representative: **Groenendaal, Antonius W. M.
Philips
Intellectual Property & Standards
P.O. Box 220
5600 AE Eindhoven (NL)**

(56) References cited:
**EP-A- 0 398 861**

• **SETO T ET AL: "Selective sharpness
enhancement of heavily-corrupted old film
sequences" PROCEEDINGS 2000
INTERNATIONAL CONFERENCE ON IMAGE
PROCESSING (CAT. NO.00CH37101),
PROCEEDINGS OF 7TH IEEE INTERNATIONAL
CONFERENCE ON IMAGE PROCESSING,
VANCOUVER, BC, CANADA, 10-13 SEPT. 2000,
pages 676-679 vol.2, XP001129099 2000,
Piscataway, NJ, USA, IEEE, USA ISBN:
0-7803-6297-7**
• **POLESEL A ET AL: "Adaptive unsharp masking
for contrast enhancement" IMAGE
PROCESSING, 1997. PROCEEDINGS.,
INTERNATIONAL CONFERENCE ON SANTA
BARBARA, CA, USA 26-29 OCT. 1997, LOS
ALAMITOS, CA, USA,IEEE COMPUT. SOC, US, 26
October 1997 (1997-10-26), pages 267-270,
XP010254160 ISBN: 0-8186-8183-7**

## Description

The invention relates to an edge enhancement unit for calculating a sharpened edge for an original edge in an image, the original edge being represented by a transient in a signal representing values of pixels of the image.

The invention further relates to a method of calculating a sharpened edge for an original edge in an image, the original edge being represented by a transient in a signal representing values of pixels of the image.

The invention further relates to an image processing apparatus comprising:

- receiving means for receiving a signal representing values of pixels of an image; and
- an edge enhancement unit for calculating a sharpened edge for an original edge in the image, the original edge being represented by a transient in the signal.

An embodiment of the unit of the kind described in the opening paragraph is known from chapter 2 of the book "Video Processing for Multimedia Systems", by G. de Haan, University Press Eindhoven, the Netherlands, 2000, ISBN 90-014015-8. Sharpness enhancement of video signals increases the perceived image quality. Sharpness enhancement means modifications of the transients in the signal representing the values of pixels. Sharpness enhancement, usually a boosting of the higher frequency components, which is called "peaking" results in edges with increased steepness. However a disadvantage of the known sharpness enhancement is that noise in the image is also enhanced. Enhancement of high frequency components in areas where little image detail is present, introduces noisiness. In these areas without edges peaking is undesired.

It is an object of the invention to provide an edge enhancement unit of the kind described in the opening paragraph being arranged to enhance the sharpness of an image signal, while preventing the enhancement of noise.

This object of the invention is achieved in that the edge enhancement unit comprises:

- an edge determining unit for determining a first property of the transient on basis of values of a first number of pixels around the original edge; and
- a filter unit for calculating the sharpened edge on basis of values of a second number of pixels around the original edge and the first property of the transient.

The sharpness enhancement is dependent on the local sharpness in the image. The edge enhancement unit according to the invention is arranged to detect edges, i.e. luminance or chrominance transients in the signal and to determine properties, i.e. characteristics, of the edges. Values of pixels corresponding to the original edge and pixels in the neighborhood of the original edge are taken into account for that. At least one property is applied for the control of the sharpness enhancement. On basis of this property the optimal filter settings of the filter unit are selected. The advantage of the edge enhancement unit is that the edge enhancement unit is arranged to classify the transients in the signal in:

- a first type of transients belonging to edges of objects in the scene being captured; and
- a second type of transients caused by noise.

The transients of the first type will be enhanced and the transients of the second type will not be enhanced. The amount of enhancement depends on the actual edge.

In an embodiment of the edge enhancement unit according to the invention, the edge determining unit is arranged to determine the first property of the transient being a width of the transient. The width of the transient is a good property to characterize the edge. Hence, a good discrimination between real object edges and noise is achieved by this embodiment of the edge enhancement unit according to the invention.

In an embodiment of the edge enhancement unit according to the invention, the filter unit is arranged to select the second number of pixels around the original edge on basis of the width of the transient. Preferably the filter unit is arranged to select the second number of pixels proportionally with the width of the transient. A variation of the filter length, i.e. the second number of selected pixels, with the width of the transient provides advantages over a filter with a fixed length: If a transient, thus an edge, is relatively wide, peaking with a filter of short length, e.g. a [ -1 2 -1]/4 high-pass filter, will only increase the noise superimposed on this relatively wide edge. A wider filter, e.g. [-1 -2-1242-1-2-1] /16 will boost lower frequencies according to the wider edge. Optionally the second number of selected pixels is even flexible for the edge: the length of the filter is varied along the edge, e.g. a short filter at the beginning and end of the transient, gradually applying a longer filter towards the center of the transient.

In an embodiment of the edge enhancement unit according to the invention, the filter unit is arranged to determine weighting factors for weighting the second number of pixels around the original edge on basis of the width of the transient. The advantage of this filter is that it allows a flexible adaptation of the filter to the large variety of transients. Optionally the weighting factors are even flexible for the transient: the weighting factors, i.e. the coefficients of the filter, are varied along the transient.

In an embodiment of the edge enhancement unit according to the invention, the edge determining unit is arranged to determine the width of the transient by means of:

- calculating a derivative signal by subtracting a predetermined threshold from the absolute value function of a first derivative of the signal representing the values of the pixels of the image; and
- calculating a distance between a first zero-crossing and a second zero-crossing of the derivative signal.

The width of the transient is determined by measuring the distance between zero crossings in the derivative signal. To reduce sensitivity to noise, a predetermined threshold is subtracted from the absolute derivative signal.

In another embodiment of the edge enhancement unit according to the invention, the edge determining unit is arranged to determine a second property of the transient being a first orientation of the original edge relative to the image and the filter unit is arranged to calculate the sharpened edge having a second orientation, the first orientation and the second orientation substantially mutually equal. The filter unit is applied in the direction perpendicular to the edge because this is the direction where sharpness enhancement has effect. Sharpness enhancement parallel to the edge will only increase noise.

In another embodiment of the edge enhancement unit according to the invention, the edge determining unit is arranged to determine a third property of the transient being a height of the transient and the edge enhancement unit is arranged to limit the edge enhancement if the height of the transient is below a first predetermined threshold and the width of the transient is below a second predetermined threshold. The advantage of this embodiment is that transients corresponding to noise are relatively well detected and no enhancement is applied for these transients.

Another embodiment of the edge enhancement unit according to the invention comprises a noise reduction unit being controlled by the edge determining unit. If a transient of the second type of transients, i.e. caused by noise, is detected then a noise reduction is applied. It has been mentioned above that sharpness enhancement parallel to the edge will only increase noise. In that direction a noise reduction filter, e.g. a low-pass filter is applied. Preferably the length of the noise reduction filter also depends on the edge: the width of the transient. In other words, the amount of blurring parallel to the edge is proportional to the size of the edge, i.e. the width of the transient.

It is an object of the invention to provide a method of the kind described in the opening paragraph to enhance the sharpness of an image signal, while preventing the enhancement of noise.

This object of the invention is achieved in that the method comprises:

- determining a first property of the transient on basis of values of a first number of pixels around the original edge; and
- calculating the sharpened edge on basis of values of a second number of pixels around the original edge and the first property of the transient.

It is advantageous to apply an embodiment of the edge enhancement unit according to the invention in an image processing apparatus as described in the opening paragraph. The image processing apparatus may comprise additional components:

- a display device for displaying an image comprising the enhanced edge, e.g. a TV-set;
- storage means for storage of an image comprising the enhanced edge, e.g. a VCR (Video Cassette Recorder) or DVD recorder (Digital Versatile Disk); or
- transmission means for providing an image comprising the enhanced edge to a TV-set, e.g. a set-top box.

The image processing apparatus might further support one or more of the following types of image processing:

- De-interlacing: Interlacing is the common video broadcast procedure for transmitting the odd or even numbered image lines alternately. De-interlacing attempts to restore the full vertical resolution, i.e. make odd and even lines available simultaneously for each image;
- Up-conversion: From a series of original input images a larger series of output images is calculated. Output images are temporally located between two original input images;
- Video compression, i.e. encoding or decoding, e.g. according to the MPEG standard or H26L standard.

Modifications of edge enhancement unit and variations thereof may correspond to modifications and variations thereof of the image processing apparatus and of the method described.

These and other aspects of the edge enhancement unit, of the method and of the image processing apparatus according to the invention will become apparent from and will be elucidated with respect to the implementations and embodiments described hereinafter and with reference to the accompanying drawings, wherein:

Fig. 1 schematically shows an embodiment of the edge enhancement unit;
Fig. 2A schematically shows an embodiment of the edge enhancement unit comprising a peaking circuit;
Fig. 2B schematically shows the embodiment of the edge enhancement unit of Fig 2A in more detail;
Fig. 3A schematically shows an image with an edge;
Fig. 3B schematically shows an edge with the vector perpendicular to the edge;
Fig. 4 schematically shows multiplication factors for filters of a peaking circuit of Fig. 2B;
Fig. 5A schematically shows an embodiment of the edge enhancement unit comprising a noise reduction unit;
Fig. 5B schematically shows an embodiment of the edge enhancement unit being arranged to perform edge enhancement and noise reduction in opposite directions; and
Fig. 6 schematically shows elements of an image processing apparatus.

Same reference numerals are used to denote similar parts throughout the figures.

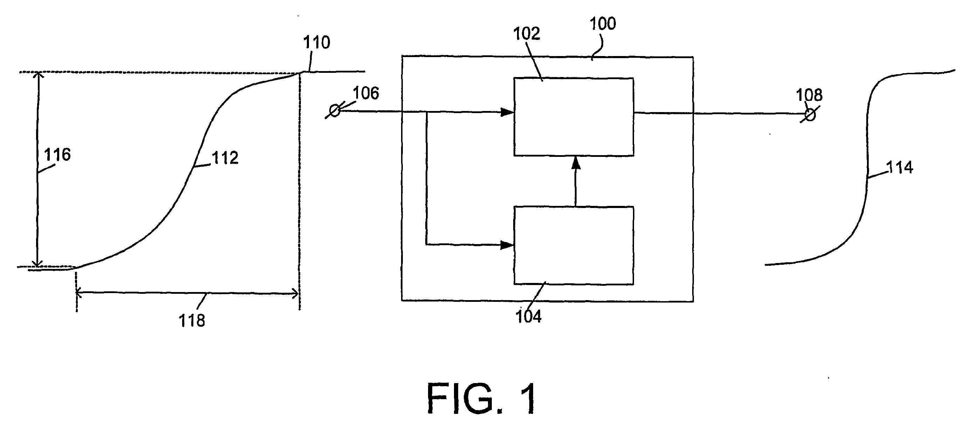

Fig. 1 schematically shows an embodiment of the edge enhancement unit 100 for calculating a sharpened edge for an original edge 300 in an image. The original edge 300 is represented by a transient 112 in a signal 110 representing values of pixels of the image. The edge enhancement unit 100 comprises:

- an edge determining unit 104 for determining a first property of the transient 112 on basis of values of a first number of pixels around the original edge; and
- a filter unit 102 for calculating the sharpened edge on basis of values of a second number of pixels around the original edge and the first property of the transient.

At the input connector 106 a video signal 110 is provided. The edge enhancement unit 100 provides the enhanced video signal, representing enhanced edges at the output connector 108.

The properties of transients in the video signal are determined by calculating the first derivative of the luminance signal in horizontal direction,

$$Y_h'(\vec{x}) = \frac{d}{dx_1} Y(\vec{x}), \qquad (1)$$

and vertical direction,

$$Y_v'(\vec{x}) = \frac{d}{dx_2} Y(\vec{x}), \qquad (2)$$

where

$$Y(\vec{x}) = Y(x_1, x_2) \qquad (3)$$

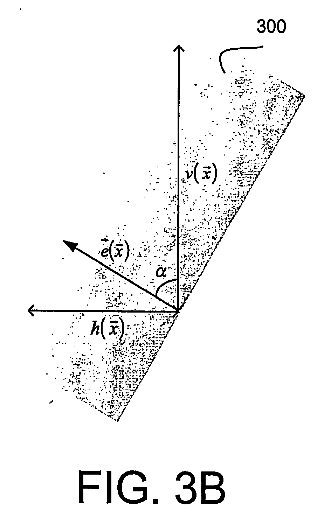

is the two dimensional luminance signal. Based on the derivative signals, the horizontal and vertical edge width, i.e. width of the transient in horizontal and vertical direction respectively, are calculated by measuring the distance between zero crossings in the respective derivative signals. To reduce sensitivity to noise, predetermined thresholds are subtracted from the absolute derivative signals. The horizontal edge width $h(\vec{x})$ (See Fig. 3B) is the distance between zero crossings of the horizontal derivative signal

$$\left| Y_h'(\vec{x}) \right| - Tr_1, \qquad (4)$$

and the vertical edge width $v(\vec{x})$ is the distance between zero crossings of the vertical derivative signal

$$\left| Y_v'(\vec{x}) \right| - Tr_2, \qquad (5)$$

The edge width perpendicular to the edge is given by:

$$\left|\vec{e}(\vec{x})\right| = \frac{h(\vec{x})\cdot v(\vec{x})}{\sqrt{h^2(\vec{x})+v^2(\vec{x})}} \tag{6}$$

In order to increase robustness of the determining unit 104, the condition for $h(\vec{x})$ as specified in Equation 7 is preferably used. Preferably a similar condition is also applied for $v(\vec{x})$.

$$h(\vec{x}) = \begin{cases} h(\vec{x}), Max(Y'(\vec{x})) > \dfrac{Tr_3}{h(\vec{x})} \forall \vec{x} \in \left[\vec{x} - \dfrac{h(\vec{x})}{2}, \vec{x} + \dfrac{h(\vec{x})}{2}\right] \\ 0, \qquad otherwise \end{cases} \tag{7}$$

In Equation 7 is specified that the width of an edge should be inversely proportional to its height, resulting in the discarding of low and narrow edges (probably noise). Optionally the thresholds $Tr_1$, $Tr_2$ and $Tr_3$ in Equations 4,5 and 7 are adapted to the noise level in the image.

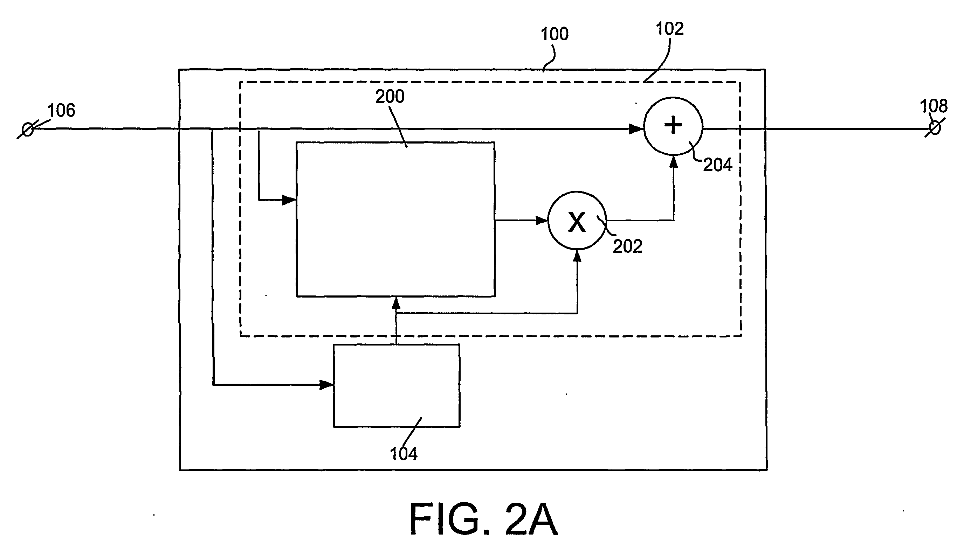

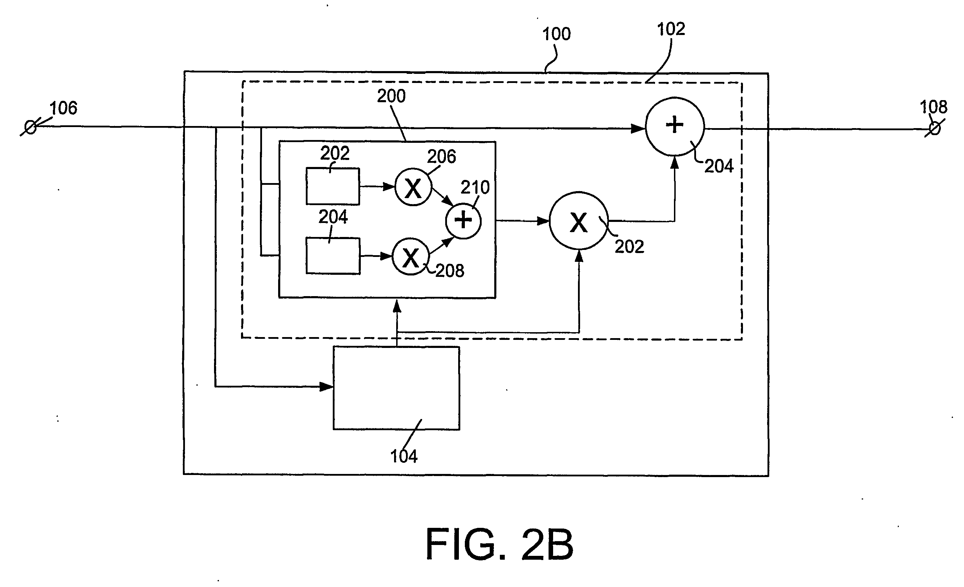

Fig. 2A schematically shows an embodiment of the edge enhancement unit 100 comprising a peaking circuit 102 as filter unit. The working of the peaking circuit is as described in chapter 2 of the book "Video Processing for Multimedia Systems", by G. de Haan ,University Press Eindhoven, the Netherlands, 2000, ISBN 90-014015-8. The output of the peaking circuit, i.e. the enhanced signal, is calculated by means of adding high frequency components to the original signal. The high frequency components are determined by means of the high pass filter unit 200. These high frequency components are weighted by means of the weighting unit 202 before the addition takes place. The addition is performed by an adding unit 204. The edge determining unit 104 is arranged to control the peaking circuit 102. Optionally the weighting unit 202 is controlled, but preferably the high pass filter 200 unit is controlled. This is described in connection with Fig. 2B.

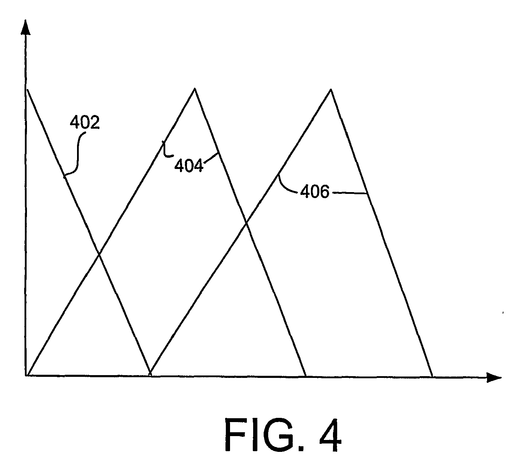

Fig. 2B schematically shows the embodiment of the edge enhancement unit of Fig 2A in more detail. Especially the filter unit 102 is depicted in more detail. By using edge characteristics as a means for "points of interest" selection, discrimination in the amount of edge enhancement for various parts of the image can be made. The gain of the high frequency boosting is dependent on the presence of edges, e.g. if there are no edges detected, less or no sharpening should be applied. Preferably the modulation of the edge enhancement is done by selecting an appropriate filter, e.g. by setting the coefficients of a convolution kernel. That means that the weighting factors of the pixels of the input image which are used to calculate the output image are selected. An embodiment of the filter unit comprises a number of filter tabs of which the multiplication coefficients can be controlled independently. Another embodiment comprises a number of parallel convolution kernels 202, 204. The results of convolutions between the input signal and these convolution kernels 202, 204 are multiplied by means of multipliers 206, 208 and added by means of adding unit 210. The multiplications are controlled by the edge determining unit 104. See Fig. 4 for an example.

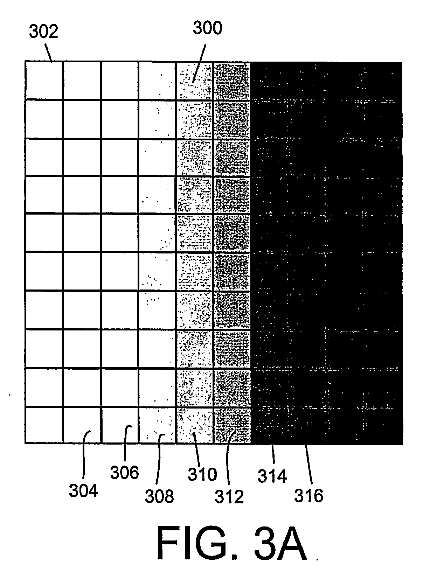

Fig. 3A schematically shows an image with a vertical edge 300. Pixels at the left-hand side of the image, e.g. 304 and 306 have relatively high luminance values and pixels at the right-hand side of the image e.g. 314 and 316 have relatively low luminance values. The values of the pixel 308-312 are mutually increasing and form the edge 300. By means of analyzing the various values of a first number of pixels, e.g. 304-316 around the edge 300 the edge determining unit is able to determine properties of the edge 300. Based on these properties and a second number of pixels, e.g. 306-314, the filter unit is arranged to calculate an enhanced edge. Optionally pixels from other rows of the pixel matrix are used for the analysis and the filtering.

Fig. 3B schematically shows an edge with the vector $\vec{e}(\vec{x})$ perpendicular to the edge 300. The edge 300 has a horizontal edge width $h(\vec{x})$ and a vertical edge width $v(\vec{x})$ which can be determined by means of Equation 4 and 5 respectively. Having knowledge over the horizontal and vertical edge width, combined with the gradient of the edge in both directions (white to black or black to white), it is possible to calculate the orientation angle $\alpha$ of the edge. Based on this angle appropriate filtering in the right directions is performed:

- edge-enhancement perpendicular to the edge, i.e. in the direction of $\vec{e}(\vec{x})$; and optionally
- noise reduction parallel to the edge.

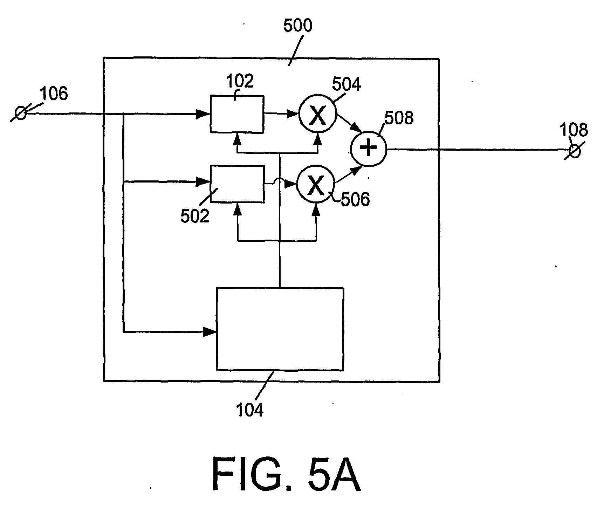

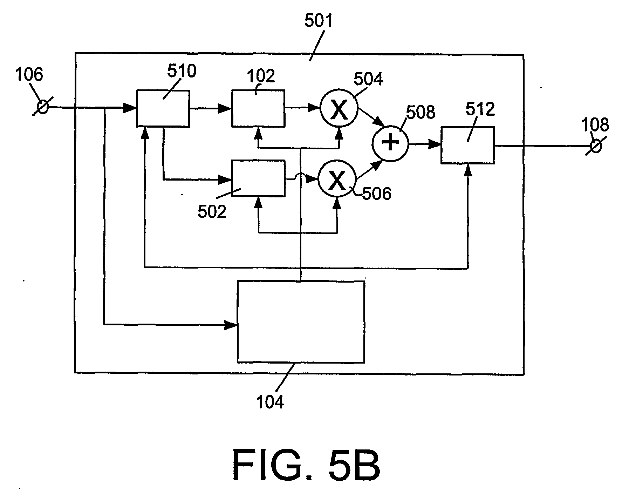

See Figs. 5A and 5B for an embodiment of the edge enhancement unit being arranged to perform both types of filtering.

Fig. 4 schematically shows the values of multiplication factors for filters of a peaking circuit of Fig. 2B as function of a property of edges. The multiplication factors are input for the multipliers 206 and 208. The x-axis represents a property of edges, e.g. the width of edges. The y-axis represents the multiplication factor. With curve 402 the value of a first multiplication factor for a first filter as function of the width of edges is depicted: e.g. for the filter with convolution coefficients [-1 2 -1]. With curve 404 the value of a second multiplication factor for a second filter as function of the width of edges is depicted: e.g. for the filter with convolution coefficients [-1 0 2 0 -1]. With curve 406 the value of a third multiplication factor for a third filter as function of the width of edges is depicted: e.g. for the filter with convolution coefficients [-1 2 -1 2 4 2 -1-2-1]. It can be seen that the curves 402-406 partly are overlapping. That means that for some values of the width of the edges multiple filters are applied.

Fig. 5A schematically shows an embodiment of the edge enhancement unit 500 comprising a noise reduction unit. The edge enhancement unit 500 comprises both a filter unit 102 for enhancing edges, i.e. boosting high frequency components and a filter unit 502 for reduction of noise, i.e. suppressing high frequency components. The actual filter characteristics of these two filter units 102, 502 depends on the control data of the edge determining unit 104: properties of transients in the signal. The outputs of the filter units 102, 502 are multiplied with multiplication factors and combined. The multiplication factors also depend on the control data of the edge determining unit 104. In fact, the multipliers 504, 505 together with the adding unit 508 form a multiplexer of the signal of which the high frequency components are enhanced and the signal of which the high frequency components are suppressed.

Fig. 5B schematically shows an embodiment of the edge enhancement unit 501 being arranged to perform edge enhancement and noise reduction in opposite directions. The edge enhancement unit comprises an interpolation unit 510 being arranged to rotate a portion of the image which corresponds with an edge on basis of the orientation angle $\alpha$ of the edge being estimated by the edge determining unit 104. Then a boosting of high frequency components is performed in a direction perpendicular to the edge by means of the filter unit 102 and a suppression of high frequency components is performed in a direction parallel to the edge by means of the filter unit 502. After combining the two filter results an inverse rotation is performed by means of the interpolation unit 512.

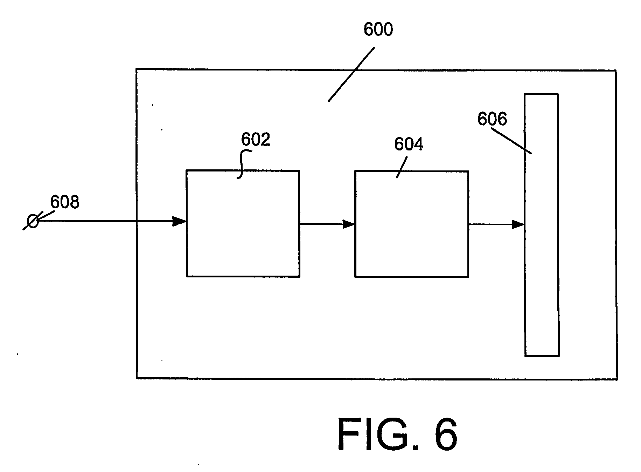

Fig. 6 schematically shows elements of an image processing apparatus 600, comprising:

- a receiving unit 602 for receiving a signal representing images to be displayed after some processing has been performed. The signal may be a broadcast signal received via an antenna or cable but may also be a signal from a storage device like a VCR (Video Cassette Recorder) or Digital Versatile Disk (DVD). The signal is provided at the input connector 608. The receiving unit 602 is arranged to be tuned to a predetermined frequency band to extract images from the provided signal.
- an edge enhancement unit 604 as described in connection with Figs. 2A-2C or Figs. 5A-5B for calculating a sharpened edge for an original edge in the image, the original edge being represented by a transient in the signal.
- a display device 606 for displaying the processed images. This display device 606 is optional.

It should be noted that the above-mentioned embodiments illustrate rather than limit the invention and that those skilled in the art will be able to design alternative embodiments without departing from the scope of the appended claims. In the claims, any reference signs placed between parentheses shall not be constructed as limiting the claim. The word 'comprising' does not exclude the presence of elements or steps not listed in a claim. The word "a" or "an" preceding an element does not exclude the presence of a plurality of such elements. The invention can be implemented by means of hardware comprising several distinct elements and by means of a suitable programmed computer. In the unit claims enumerating several means, several of these means can be embodied by one and the same item of hardware.

**Claims**

1. An edge enhancement unit (100) for calculating a sharpened edge for an original edge in an image, the original edge being represented by a transient (112) in a signal representing values of pixels of the image, the edge enhancement unit (100) comprising:

    - an edge determining unit (104) for determining a first property of the transient (112), said first property being a width of said transient, on basis of values of a first number of pixels (304-316) around the original edge; and
    - a filter unit (102) for calculating the sharpened edge on basis of values of a second number of pixels (306-314) around the original edge and the first property of the transient (112).

2. An edge enhancement unit (100) as claimed in claim 1, **characterized in that** the filter unit (102) is arranged to select the second number of pixels around the original edge on basis of the width (118) of the transient (112).

3. An edge enhancement unit (100) as claimed in claim 2, **characterized in that** the filter unit (102) is arranged to select the second number of pixels proportionally with the width (118) of the transient (112).

**4.** An edge enhancement unit (100) as claimed in claim 1, **characterized in that** the filter unit (102) is arranged to determine weighting factors for weighting the second number of pixels around the original edge on basis of the width (118) of the transient (112).

**5.** An edge enhancement unit (100) as claimed in claim 1, **characterized in that** the edge determining unit (104) is arranged to determine the width (118) of the transient (112) by means of:

    - calculating a derivative signal by subtracting a predetermined threshold from the absolute value function of a first derivative of the signal representing the values of the pixels of the image; and
    - calculating a distance between a first zero-crossing and a second zero-crossing of the derivative signal.

**6.** An edge enhancement unit (100) as claimed in claim 1, **characterized in that** the edge determining unit (104) is arranged to determine a second property of the transient (112) being a first orientation of the original edge relative to the image and that the filter unit (102) is arranged to calculate the sharpened edge having a second orientation, wherein the first orientation and the second orientation are substantially mutually equal.

**7.** An edge enhancement unit (100) as claimed in claim 1, **characterized in that** the edge determining unit (104) is arranged to determine a third property of the transient (112) being a height (116) of the transient (112) and that the edge enhancement unit (100) is arranged to limit the edge enhancement if the height (116) of the transient (112) is below a first predetermined threshold and the width (118) of the transient (112) is below a second predetermined threshold.

**8.** An edge enhancement unit (500) as claimed in claim 1, **characterized in** comprising a noise reduction unit being controlled by the edge determining unit (104).

**9.** A method of calculating a sharpened edge for an original edge in an image, the original edge being represented by a transient (112) in a signal representing values of pixels of the image, the method comprising:

    - determining a first property of the transient (112) on basis of values of a first number of pixels (304-316) around the original edge, and wherein said first property is a width of said transient; and
    - calculating the sharpened edge on basis of values of a second number of pixels (306-314) around the original edge and the first property of the transient (112).

**10.** An image processing apparatus (600) comprising:

    - receiving means (602) for receiving a signal representing values of pixels of an image; and
    - an edge enhancement unit (604) as claimed in claim 1 for calculating a sharpened edge for an original edge in the image, the original edge being represented by a transient (112) in the signal.

**11.** An image processing apparatus (600) as claimed in claim 10, **characterized in** further comprising a display device (606) for displaying the sharpened edge.

**Patentansprüche**

**1.** Kantenschärfungseinheit (100) zum Berechnen der Kantenschärfung für eine ursprüngliche Kante in einem Bild, wobei die ursprüngliche Kante durch einen Übergang (112) in einem Signal dargestellt wird, das Pixelwerte des Bildes darstellt, wobei die Kantenschärfungseinheit (112) Folgendes umfasst:

    - eine Kantenbestimmungseinheit (104) zum Bestimmen einer ersten Eigenschaft des Übergangs (112), wobei die genannte erste Eigenschaft eine Breite des genannten Übergangs ist, und zwar auf Basis von Werten einer ersten Anzahl Pixel (304-316) um die ursprüngliche Kante herum; und
    - eine Filtereinheit (102) zum Berechnen der Kantenschärfe auf Basis von Werten einer zweiten Anzahl Pixel (306-314) um die ursprüngliche Kante herum und der ersten Eigenschaft des Übergangs (112).

**2.** Kantenschärfungseinheit (100) nach Anspruch 1, **dadurch gekennzeichnet, dass** die Filtereinheit (102) dazu vorgesehen ist, die zweite Anzahl Pixel um die ursprüngliche Kante auf Basis der Breite (118) des Übergangs (112) zu selektieren.

3. Kantenschärfungseinheit (100) nach Anspruch 2, **dadurch gekennzeichnet, dass** eine Filtereinheit (102) vorgesehen ist um die zweite Anzahl Pixel proportional zu der Breite (118) des Übergangs (112) zu selektieren.

4. Kantenschärfungseinheit (100) nach Anspruch 1, **dadurch gekennzeichnet, dass** die Filtereinheit (102) dazu vorgesehen ist, Gewichtungsfaktoren zum Gewichten der zweiten Anzahl Pixel um die ursprüngliche Kante zu bestimmen, und zwar auf Basis der Breite (118) des Übergangs (112) zu bestimmen.

5. Kantenschärfungseinheit (100) nach Anspruch 1, **dadurch gekennzeichnet, dass** die Kantenbestimmungseinheit (104) dazu vorgesehen ist, die Breite (118) des Übergangs (112) zu bestimmen, und zwar durch:

   - Berechnung eines abgeleiteten Signals durch Subtrahierung einer vorbestimmten Schwelle von der Absolutwertfunktion einer ersten Abgeleiteten des Signals, das die Werte der Pixel des Bildes darstellt; und
   - Berechnung eines Abstandes zwischen einem ersten Nulldurchgang und einem zweiten Nulldurchgang des abgeleiteten Signals.

6. Kantenschärfungseinheit (100) nach Anspruch 1, **dadurch gekennzeichnet, dass** die Kantenbestimmungseinheit (104) dazu vorgesehen ist, eine zweite Eigenschaft des Übergangs (112) zu bestimmen, was eine erste Orientierung der ursprünglichen Kante gegenüber dem Bild ist und dass die Filtereinheit (102) dazu vorgesehen ist, die Kantenschärfung mit einer zweiten Orientierung zu berechnen, wobei die erste Orientierung und die zweite Orientierung einander nahezu gleich sind.

7. Kantenschärfungseinheit (100) nach Anspruch 1, **dadurch gekennzeichnet, dass** die Kantenbestimmungseinheit (104) dazu vorgesehen ist, eine dritte Eigenschaft des Übergangs (112) zu bestimmen, welche die Höhe (116) des Übergangs (112) ist und dass die Kantenschärfungseinheit (100) dazu vorgesehen ist, die Kantenschärfung zu begrenzen, wenn die Höhe (116) des Übergangs (112) unterhalb einer ersten vorbestimmten Schwelle liegt und die Breite (118) des Übergangs (112) unterhalb einer zweiten vorbestimmten Schwelle liegt.

8. Kantenschärfungseinheit (500) nach Anspruch 1, **dadurch gekennzeichnet, dass** diese Einheit eine Rauschunterdrückungseinheit hat, die von der Kantenbestimmungseinheit (104) gesteuert wird.

9. Verfahren zum Berechnen einer Kantenschärfung für eine ursprüngliche Kante in einem Bild, wobei die ursprüngliche Kante durch einen Übergang (112) in einem Signal dargestellt wird, das Werte von Pixeln des Bildes darstellt, wobei das Verfahren die nachfolgenden Verfahrensschritte umfasst:

   - das Bestimmen einer ersten Eigenschaft des Übergangs (112), auf Basis von Werten einer ersten Anzahl Pixel (304-316) um die ursprüngliche Kante herum, und wobei die genannte erste Eigenschaft eine Breite des genannten Übergangs ist; und
   - das Berechnen der Kantenschärfung auf Basis von Werten einer zweiten Anzahl Pixel (306-314) um die ursprüngliche Kante herum und auf Basis der ersten Eigenschaft des Übergangs (112).

10. Bildverarbeitungsanordnung (600), die Folgendes umfasst:

   - Empfangsmittel (602) zum Empfangen eines Signals, das Werte von Pixeln eines Bildes darstellt; und
   - eine Kantenschärfungseinheit (604) nach Anspruch 1 zum Berechnen einer Kantenschärfung für eine ursprüngliche Kante in dem Bild, wobei die ursprüngliche Kante durch einen Übergang (112) in dem Signal dargestellt wird.

11. Bildverarbeitungsanordnung (600) nach Anspruch 10, **dadurch gekennzeichnet, dass** sie weiterhin eine Wiedergabeanordnung (606) aufweist zum Wiedergeben der verschärften Kante.

**Revendications**

1. Unité d'amélioration de bordure (100) pour calculer une bordure vive à partir d'une bordure originale dans une image, la bordure originale étant représentée par un transitoire (112) dans un signal représentant des valeurs de pixels de l'image, l'unité d'amélioration de bordure comprenant :

   - une unité de détermination de bordure (104) pour déterminer une première propriété du transitoire (112), ladite première propriété étant une largeur dudit transitoire, sur la base de valeurs d'un premier nombre de pixels (304-316) autour de la bordure originale; et
- une unité de filtrage (102) pour calculer la bordure vive sur la base de valeurs d'un deuxième nombre de pixels (306-314) autour de la bordure originale et de la première propriété du transitoire (112).

2. Unité d'amélioration de bordure (100) selon la revendication 1, **caractérisée en ce que** l'unité de filtrage (102) est aménagée pour sélectionner le deuxième nombre de pixels autour de la bordure originale sur la base de la largeur (118) du transitoire (112).

3. Unité d'amélioration de bordure (100) selon la revendication 2, **caractérisée en ce que** l'unité de filtrage (102) est aménagée pour sélectionner le deuxième nombre de pixels proportionnellement à la largeur (118) du transitoire (112).

4. Unité d'amélioration de bordure (100) selon la revendication 1, **caractérisée en ce que** l'unité de filtrage (102) est aménagée pour déterminer des facteurs de pondération pour pondérer le deuxième nombre de pixels autour de la bordure originale sur la base de la largeur (118) du transitoire (112).

5. Unité d'amélioration de bordure (100) selon la revendication 1, **caractérisée en ce que** l'unité de détermination de bordure (104) est aménagée pour déterminer la largeur (118) du transitoire (112) au moyen de :

   - un calcul d'une dérivée de signal en soustrayant un seuil prédéterminé de la fonction de valeur absolue d'une dérivée première du signal représentant les valeurs des pixels de l'image; et
   - un calcul d'une distance entre un premier passage par zéro et un deuxième passage par zéro de la dérivée de signal.

6. Unité d'amélioration de bordure (100) selon la revendication 1, **caractérisée en ce que** l'unité de détermination de bordure (104) est aménagée pour déterminer une deuxième propriété du transitoire (112) comme une première orientation de la bordure originale par rapport à l'image et **en ce que** l'unité de filtrage (102) est aménagée pour calculer la bordure vive ayant une deuxième orientation, dans laquelle la première orientation et la deuxième orientation sont substantiellement mutuellement égales.

7. Unité d'amélioration de bordure (100) selon la revendication 1, **caractérisée en ce que** l'unité de détermination de bordure (104) est aménagée pour déterminer une troisième propriété du transitoire (112) comme une hauteur (116) du transitoire (112) et **en ce que** l'unité d'amélioration de bordure (100) est aménagée pour limiter les améliorations de bordure si la hauteur (116) du transitoire (112) est inférieure à un premier seuil prédéterminé et la largeur (118) du transitoire (112) est inférieure à un deuxième seuil prédéterminé.

8. Unité d'amélioration de bordure (500) selon la revendication 1, **caractérisée en ce qu'**elle comprend une unité de réduction de bruit commandée par l'unité de détermination de bordure (104).

9. Procédé de calcul d'une bordure vive à partir d'une bordure originale dans une image, la bordure originale étant représentée par un transitoire (112) dans un signal représentant des valeurs de pixels de l'image, le procédé comprenant :

   - une détermination d'une première propriété du transitoire (112) sur la base de valeurs d'un premier nombre de pixels (304-316) autour de la bordure originale, et dans lequel ladite première propriété est une largeur dudit transitoire; et
   - un calcul de la bordure vive sur la base de valeurs d'un deuxième nombre de pixels (306-314) autour de la bordure originale et de la première propriété du transitoire (112).

10. Appareil de traitement d'image (600) comprenant :

    - des moyens de réception (602) pour recevoir un signal représentant des valeurs de pixels d'une image; et
    - une unité d'amélioration de bordure (604) selon la revendication 1 pour calculer une bordure vive à partir d'une bordure originale dans l'image, la bordure originale étant représentée par un transitoire (112) dans le signal.

11. Appareil de traitement d'image (600) selon la revendication 10, **caractérisé en ce qu'**il comprend en outre: un dispositif d'affichage (606) pour afficher la bordure vive.

FIG. 1

FIG. 2A

EP 1 512 121 B1

FIG. 2B

FIG. 3A

EP 1 512 121 B1

FIG. 3B

FIG. 4

FIG. 5A

FIG. 5B

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **G. DE HAAN.** Video Processing for Multimedia Systems. University Press Eindhoven, 2000